# EUROPEAN PATENT SPECIFICATION

(11) **EP 4 569 054 B1**
(45) Date of publication and mention of the grant of the patent: **03.09.2025**
(21) Application number: 24787147.8
(22) Date of filing: 09.10.2024
(51) Int. Cl.: C10M 107/28, C10M 145/10

(54) **POLYALKYL (METH)ACRYLATE POLYMERS AS HIGH VISCOSITY BASE FLUIDS**
POLYALKYL(METH)ACRYLAT-POLYMERE ALS HOCHVISKOSE BASISFLÜSSIGKEITEN
POLYMÈRES DE (MÉTH)ACRYLATE DE POLYALKYLE UTILISÉS EN TANT QUE FLUIDES DE BASE À VISCOSITÉ ÉLEVÉE

(30) Priority: 16.10.2023 EP 23203761
(43) Date of publication of application: 18.06.2025
(73) Proprietor: Evonik Operations GmbH, 45128 Essen (DE)
(72) Inventor: The designation of the inventor has not yet been filed
(74) Representative: Evonik Patent Association
(86) International application number: PCT/EP2024/078308
(87) International publication number: WO 2025/082808

(56) References cited:
- EP-A1- 0 471 266
- EP-B1- 4 073 210
- US-A- 5 043 087
- ESLAMI H ET AL: "Emulsion atom transfer radical polymerization of 2-ethylhexyl methacrylate", POLYMER, ELSEVIER, AMSTERDAM, NL, vol. 46, no. 15, 11 July 2005 (2005-07-11), pages 5484 - 5493, XP004950165, ISSN: 0032-3861, DOI: 10.1016/J.POLYMER.2005.05.031

## Description

### TECHNICAL FIELD OF THE INVENTION

The invention relates to polyalkyl (meth)acrylate polymers and to a method for the preparation of these polymers. The present invention is also directed to lubricating oil compositions comprising the aforementioned polymers, as well as to the use of said polymers as a lubricant additive or as a synthetic base fluid in a lubricating oil composition, preferably in a gear oil composition, a transmission oil composition, a hydraulic oil composition, an engine oil composition, a marine oil composition, an industrial lubricating oil composition or in grease.

### BACKGROUND OF THE INVENTION

The present invention relates to the field of lubrication. Lubricants are compositions that reduce friction between surfaces. In addition to allowing freedom of motion between two surfaces and reducing mechanical wear of the surfaces, a lubricant also may inhibit corrosion of the surfaces and/or may inhibit damage to the surfaces due to heat or oxidation. Examples of lubricant compositions include, but are not limited to, engine oils, transmission fluids, gear oils, industrial lubricating oils, greases and metalworking oils.

Lubricants typically contain a base fluid and variable amounts of additives. The terminology base oil, base stock or base fluid is commonly used interchangeably. Here, base fluid is used as a general term.

High viscosity base fluids are used to lift the viscosity index (VI) and to thicken lubricant formulations with demanding shear stability requirements. A typical application are gear oils which have very demanding requirements due to high mechanical stress and a broad temperature range in operation.

A wide variety of additives may be combined with the base fluid, depending on the intended use of the lubricant. Examples of lubricant additives include, but are not limited to, viscosity index improvers, thickeners, pour point depressants, oxidation inhibitors, corrosion inhibitors, dispersing agents, high pressure additives, anti-foaming agents and metal deactivators.

The most common thickener used in mineral oil based industrial gear oils is bright stock. Bright stock is a product of Group I base oil refineries which are technologically outdated so future supply is unknown. Replacement with alternative thickeners is difficult as typical polyolefin thickeners such as polyisobutylene (PIB), olefin copolymers (OCP) and polyalphaolefins (PAO) are very apolar, which causes compatibility issues (LUBES'N'GREASES (2015) 4, p.52-60; LUBES'N'GREASES (2021) 11, p.24-29; LUBES'N'GREASES (2022) 4, p.35-38). Viscosity of bright stock is also limited so high ISO viscosity grades like 680 or 1000 require a more powerful thickener in combination with bright stock.

The advantage of using alternative thickeners having a higher polarity is that these polar high viscosity base fluids do not need the addition of nonpolar low viscous fluids, such as esters, as compatibilizers for the polar lubricant additives. Furthermore, polar high viscosity fluids usually do not cause problems with coatings and seals in comparison with polar low viscous fluids. Such thickeners with higher polarity are for example copolymers of alpha-olefins with maleates (e.g. DE3223694), acrylates (e.g. DE2243064 or EP4015604), methacrylates (e.g. EP0471266) or terpolymers based on the aforementioned monomers (e.g. WO2020078770). Alternatively, oil compatible polyesters (e.g. WO0146350 or WO2022003087), polyvinylethers (US20130165360), polyacrylates (e.g. EP4073210), or polyalkyl (meth)acrylate (PAMA) can be applied.

More specifically, polyalkyl (meth)acrylate base fluids (PAMA base fluids) are mainly used and designed as thickeners for very high performing synthetic or semi-synthetic formulations, which have similar performance parameters as polyalphaolefin base fluids (PAO base fluids). PAMA base fluids are commonly used in most demanding applications, such as wind turbine gear oils. The document US9,617,495 discloses polyalkyl (meth)acrylates for use in lubricants with high viscosity index and good anti-wear performance, particularly in wind turbine transmissions. To achieve this targeted purpose, the polyalkyl (meth)acrylate polymers disclosed in US9,617,495 are prepared using a monomer mixture comprising from 50 to 100% by weight of linear and branched C₆-C₁₅ alkyl (meth)acrylates where the amount of branched alkyl (meth)acrylates is from 5 to 80% by weight, preferably from 10 to 65% by weight, based on the total weight of C₆-C₁₅ alkyl (meth)acrylates. All examples are based on a careful balance of linear and branched monomers to provide high viscosity index (VI), while preventing crystallization at low temperatures. It is described that the transmission lubricants must comprise at least 30% by weight of polyalkyl (meth)acrylates, which is a very high treat rate. However, for less demanding applications, the required high treat rate of PAMA to reach the viscometric performance make them less attractive compared to polyolefins, such as PIB.

WO2012135054 discloses PAMA viscosity index improvers (VII) prepared by free-radical polymerization using at least 5 to 15% by weight of methyl (meth)acrylate (MMA) and 5 to 95% by weight of a C₈ to C₁₀ alkyl (meth)acrylate. Polar monomers like MMA reduce the coil size in solution and contribute to a strong coiling/uncoiling effect which lifts the VI. As a consequence, the thickening power of these polymers is reduced, especially at lower temperatures.

EP0937769 discloses PAMA-based viscosity index improvers prepared using different combinations of C₉ to C₂₅ alkyl (meth)acrylates, C₇ to C₁₂ alkyl (meth)acrylates branched in the C₂ position of the alkyl radical and at least one monomer from the group of C₂ to C₈ alkyl (meth)acrylates, vinyl aromatic compounds and nitrogen-containing vinyl monomers. The amount of alkyl (meth)acrylates with not more than 11 carbon atoms in the alkyl side chain is no more than 60% by weight, preferably no more than 50% by weight, even more preferably no more than 35% by weight.

There is still the need to provide highly shear stable polymeric synthetic base fluids or lubricating oil polymeric additives, which have a positive influence on oil solubility and component solubility. Furthermore, the new polymers should be able to thicken an oil to a desired viscosity, even at low treat rates. The polymers should have good viscometric performance, including low temperature and viscosity index performance to reduce the effect of changes in viscosity with temperature, when used in lubricant oil compositions. Last, but not least, it is desired that the polymers should not have any negative effect on the foaming properties of the lubricant oil composition they are added to. Ideally, no foam or only very little foam with quick collapse times should be observed to meet the requirements of the industry.

### BRIEF SUMMARY OF THE INVENTION

Surprisingly, it has been found that mid-chain polyalkyl (meth)acrylates, comprising a high amount of branched alkyl methacrylate monomer units, can meet the viscometric targets of industrial gear oils at treat rates close to simple well-known polyolefins, such as ethylene-propylene copolymers or polyisobutylenes, usually used in the lubricant market. In addition, they have the advantages of a polar high viscous base fluid, e.g. compatibilization of additives with the base fluid, which allows a full or partial replacement of bright stock in the formulation. Furthermore, they do not have any negative effect on the foaming properties of the lubricant oil composition they are added to.

Accordingly, a first aspect of the invention is a polyalkyl (meth)acrylate polymer as defined in claim 1 and its dependent claims.

A second aspect of the invention is a method for preparing the polyalkyl (meth)acrylate polymers according to the invention.

A third aspect of the invention is a lubricant composition comprising at least one base oil and at least one polyalkyl (meth)acrylate polymer according to the invention.

A fourth aspect of the invention is the use of these polyalkyl (meth)acrylate polymers as lubricant additive or synthetic base fluid in a lubricating oil composition, preferably in a gear oil composition, a transmission oil composition, a hydraulic oil composition, an engine oil composition, a marine oil composition, an industrial lubricating oil composition or in grease.

### DETAILED DESCRIPTION OF THE INVENTION

### Polymers according to the invention

The present invention relates to a polyalkyl (meth)acrylate polymer obtainable by polymerizing a monomer composition consisting of:
a) at least 85% by weight of monomer a) selected from the group consisting of an alkyl methacrylate with the formula (I) or a mixture thereof, based on the total weight of the monomer composition, 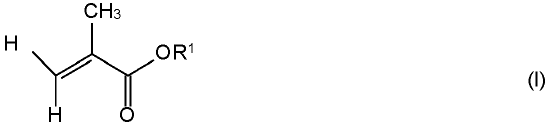 wherein R¹ is a linear or a branched alkyl radical having 9 or 10 carbon atoms and wherein from 80% to 100% by weight of the R¹ radicals are branched, based on the weight of the total amount of methacrylate monomers a) of formula (I),
b) from 0 to 15% by weight of monomer b) selected from the group consisting of an alkyl methacrylate monomer having a linear or a branched alkyl chain from 11 to 30 carbon atoms, or a mixture thereof, based on the total weight of the monomer composition,
c) from 0 to 3% by weight of monomer c) selected from the group consisting of alkyl (meth)acrylate having a linear alkyl chain from 1 to 6 carbon atoms, alkyl acrylates having an alkyl chain from 7 to 18 carbon atoms, or a mixture thereof, based on the total weight of the monomer composition,
wherein more than 80% by weight of the monomers a), b) and c) in the monomer composition are branched, and wherein the polyalkyl (meth)acrylate polymer has a weight-average molecular weight from 5,000 to 30,000 g/mol according to DIN 55672-1.

In the present invention, the term "alkyl methacrylate" refers to esters of methacrylic acid and the term "alkyl acrylate" refers to esters of acrylic acid. The term "(meth)acrylate" refers to esters of acrylic acid, esters of methacrylic acid or a mixture of esters of acrylic acid and methacrylic acid.

Within the meaning of the present invention, the monomer composition corresponds to the monomers used to prepare the polymer according to the present invention (not including the other reactants such as initiators, chain transfer agents).

According to the preferred aspect of the invention, the polyalkyl (meth)acrylate polymer has a kinematic viscosity from 1,000 to 50,000 mm²/s at 100°C according to ASTM D445. According to another preferred aspect of the invention, the polyalkyl (meth)acrylate polymer has a kinematic viscosity from 1,000 to 30,000 mm²/s at 100°C according to ASTM D445, more preferably from 1,200 to 20,000 mm²/s at 100°C according to ASTM D445, even more preferably from 1,500 to 10,000 mm²/s at 100°C according to ASTM D445, most preferably from 1,500 to 7,000 mm²/s at 100°C according to ASTM D445.

According to the present invention, the polyalkyl (meth)acrylate polymer comprises at least 85% by weight of monomer a) selected from the group consisting of an alkyl methacrylate with the formula (I) or a mixture thereof, wherein R¹ is a linear or a branched alkyl radical having 9 or 10 carbon atoms and wherein from 80% to 100% by weight of the R¹ radicals are branched, based on the weight of the total amount of methacrylate monomers a) of formula (I). Preferably, the polyalkyl (meth)acrylate polymer comprises from 85% to 100% by weight of monomer a), more preferably from 85% to 99.9% by weight, even more preferably from 85% to 95% by weight, most preferably from 85% to 94.9% by weight, based on the total weight of the monomer composition.

Preferably, the monomers a) are selected from the group consisting of isononyl methacrylate, 2,6-dimethyl-4-heptyl methacrylate, 2-propylheptyl methacrylate, isodecyl methacrylate, or a mixture thereof. More preferably, the monomers a) are selected from the group consisting of isononyl methacrylate, 2-propylheptyl methacrylate, isodecyl methacrylate, or a mixture thereof.

According to another preferred aspect of the present invention, the monomer composition to prepare the polyalkyl (meth)acrylate polymer further comprises alkyl methacrylate monomer b) having a linear or a branched alkyl chain from 11 to 30 carbon atoms, preferably alkyl methacrylate monomer b) having a linear or a branched alkyl chain from 11 to 15 carbon atoms, or a mixture thereof. The alkyl methacrylates b) refer to esters of methacrylic acid with linear or branched chain alcohols having from 11 to 30 carbon atoms. The term "esters of methacrylic acid with straight chain alcohols having 11 to 30 carbon atoms" encompasses individual methacrylic esters with an alcohol of a particular length, and likewise mixtures of methacrylic esters with alcohols of different lengths. Most preferable alkyl methacrylate b) is lauryl methacrylate (alkyl methacrylates having a C₁₂-C₁₄ linear alkyl group).

Preferably, the monomer composition to prepare the polyalkyl (meth)acrylate polymer comprises from 5 to 15% by weight, preferably from 5 to 14.9% by weight, of monomer b), based on the total weight of the monomer composition.

Preferably, the monomer composition to prepare the polyalkyl (meth)acrylate polymer further comprises monomer c) selected from the group consisting of alkyl (meth)acrylate having a linear alkyl chain from 1 to 6 carbon atoms, alkyl acrylates having an alkyl chain from 7 to 18 carbon atoms, or a mixture thereof. Most preferred monomer c) is selected from the group consisting of methyl methacrylate, methyl acrylate, butyl methacrylate, butyl acrylate, ethyl methacrylate, ethyl acrylate, 2-ethylhexyl acrylate, 2-propylheptyl acrylate, lauryl acrylate, isotridecyl acrylate, stearyl acrylate, or a mixture thereof.

Preferably, the monomer composition to prepare the polyalkyl (meth)acrylate polymer comprises from 0.1 to 3% by weight of monomer c), based on the total weight of the monomer composition.

According to the present invention, the polyalkyl (meth)acrylate polymer has a weight-average molecular weight from 10,000 to 30,000 g/mol, according to DIN 55672-1. Preferably, the polyalkyl (meth)acrylate polymer has a weight-average molecular weight from 10,000 to 25,000 g/mol, more preferably from 13,000 to 20,000 g/mol, according to DIN 55672-1.

In the present invention, the weight-average molecular weights (M_{w}) or number-average molecular weights (Mₙ) of the copolymers were determined by gel permeation chromatography (GPC) using PMMA calibration standards according to DIN 55672-1 using the following measurement conditions:
Eluent: tetrahydrofuran (THF)
Operation temperature: 35 °C
Columns: the column set consists of four columns: two columns SDV 106 Å, one column SDV 104Å and one column SDV 103Å (PSS Standards Service GmbH, Mainz, Germany), all with the size of 300 x 8 mm and an average particle size of 10 µm
Flow rate: 1mL/min
Injected volume: 100 µL
Instrument: Agilent 1100 series consisting of an autosampler, pump and column oven
Detection device: a refractive index detector from Agilent 1100 series.

Preferably, the polymers of the invention have a very low degree of cross-linking and a narrow molecular weight distribution, which further contributes to the shear resistance. The low degree of crosslinking and the narrow molecular weight are reflected in the polydispersity index of the polyalkyl (meth)acrylate polymers. Preferably, the polydispersity index (PDI) of the copolymers according to the invention is in the range of from 1.0 to 2.5, more preferably in the range of from 1.5 to 2.2, even more preferably in the range of from 1.5 to 2.0. A polydispersity index in the range of 1.0 to 2.5 is considered optimal for most industrial applications with regard to the shear resistance of the copolymers. The polydispersity index is defined as the ratio of weight-average molecular weight to number-average molecular weight (M_{w}/Mₙ).

According to another preferred aspect of the invention, the total content of monomer units derived from monomers a) and b) in the polyalkyl (meth)acrylate polymer of the invention sums up to at least 90% by weight, more preferably sums up to at least 95% by weight, even more preferably sums up to at least 98% by weight, most preferably sums up to 100% by weight, based on the total weight of the polyalkyl (meth)acrylate polymer.

According to another preferred embodiment of the invention, the monomer composition to prepare the polyalkyl (meth)acrylate polymer according to the invention consists of methacrylate monomers a) of formula (I), in which case the resulting polymer is a polyalkyl methacrylate polymer.

According to the preferred embodiment of the invention, the monomer composition to prepare the polyalkyl (meth)acrylate polymer according to the invention consists of, based on the total weight of the monomer composition:
a) at least 85% by weight, preferably from 85 to 100% by weight of monomer a), based on the total weight of the monomer composition,
b) from 0 to 15% by weight of monomer b), based on the total weight of the monomer composition,
c) from 0 to 3% by weight of monomer c), based on the total weight of the monomer composition.

According to another preferred embodiment of the invention, the monomer composition to prepare the polyalkyl (meth)acrylate polymer according to the invention consists of, based on the total weight of the monomer composition:
a) at least 85% by weight, preferably from 85 to 99.9% by weight, of monomer a), based on the total weight of the monomer composition,
b) from 0 to 14.9% by weight of monomer b), based on the total weight of the monomer composition,
c) from 0.1 to 3% by weight of monomer c), based on the total weight of the monomer composition.

According to another preferred embodiment of the invention, the monomer composition to prepare the polyalkyl (meth)acrylate polymer according to the invention consists of, based on the total weight of the monomer composition:
a) at least 85% by weight, preferably from 85 to 95% by weight of monomer a), based on the total weight of the monomer composition,
b) from 5 to 15% by weight of monomer b), based on the total weight of the monomer composition,
c) from 0 to 3% by weight of monomer c), based on the total weight of the monomer composition.

According to another preferred embodiment of the invention, the monomer composition to prepare the polyalkyl (meth)acrylate polymer according to the invention consists of, based on the total weight of the monomer composition:
a) at least 85% by weight, preferably from 85 to 94.9% by weight of monomer a), based on the total weight of the monomer composition,
b) from 5 to 14.9% by weight of monomer b), based on the total weight of the monomer composition,
c) from 0.1 to 3% by weight of monomer c), based on the total weight of the monomer composition.

According to the invention, the polyalkyl (meth)acrylate polymer is an amorphous statistical polymer, wherein the monomer units a) and optionally monomers b) and/or c) are distributed randomly, and sometimes unevenly, in the polymer.

According to a preferred embodiment of the invention, the preferred polyalkyl (meth)acrylate polymers according to the invention are poly isononyl methacrylate, poly 2-propylheptyl methacrylate and poly isodecyl methacrylate. All preferred aspects of the polymer as listed above apply for these preferred polymers.

### Method for preparing the polyalkyl (meth)acrylate polymer of the invention

According to the present invention, the above-mentioned polymers are prepared following the method comprising the steps of:
i) providing a monomer composition as described above; and
ii) initiating radical polymerization in the monomer composition of step (i).

The polyalkyl (meth)acrylates can preferably be obtained by free-radical polymerization. Accordingly, the proportion by weight of the respective repeat units that these polymers have is calculated from the proportions by weight of corresponding monomers used for preparation of the polymers.

The preparation of the polyalkyl (meth)acrylates from the above-described compositions is known per se. For instance, these polymers can be obtained especially by free-radical polymerization, and also related processes, for example ATRP (= Atom Transfer Radical Polymerization) or RAFT (= Reversible Addition Fragmentation Chain Transfer).

One comprehensive description, more particularly with further references, of these methods is given in K. Matyjaszewski, T. P. Davis, Handbook of Radical Polymerization, Wiley Interscience, Hoboken 2002, to which explicit reference is made for the purposes of the disclosure.

The free-radical polymerization of the ethylenically unsaturated compounds can be affected in a manner known per se. Customary free-radical polymerization is described inter alia in Ullmann's Encyclopedia of Industrial Chemistry, Sixth Edition.

In the context of the present invention, the polymerization is initiated using at least one polymerization initiator for free-radical polymerization. These include the azo initiators widely known in the specialist field, such as 2,2'-azobisisobutyronitrile, 2,2'-azobis(2,4-dimethylvaleronitrile) and 1,1-azobiscyclohexanecarbonitrile, organic peroxides such as dicumyl peroxide, diacyl peroxides such as dilauroyl peroxide, peroxydicarbonates such as diisopropyl peroxydicarbonate, peresters such as tert-butyl peroxy-2-ethylhexanoate, and the like.

According to the invention, very particular preference is given to polymerization initiators having a half-life of 1 hour at a temperature in the range from 25°C to 200°C, preferably in the range from 50°C to 150°C, especially in the range from 50°C to 100°C. Particularly preferred polymerization initiators are peroxidic polymerization initiators, more preferably tert-butylperoxy-2-ethylhexanoate.

In preferred processes, the at least one polymerization initiator for the free-radical polymerization is added preferably in one step, more preferably in multiple addition steps, even more preferably in at least two addition steps, most preferably in three addition steps. The polymerization initiator can preferably be added all at once in each addition step. More preferably, the polymerization initiator can be metered in each addition step, even more preferably continuously, especially with a constant metering rate.

The polymerization initiator can be added in each step in undiluted form or in diluted form, preferably dissolved in a solvent, especially in the form of a 10% by weight to 50% by weight solution in at least one mineral oil, in a polyalphaolefin and/or in the starting material monomers, more preferably in monomer a), monomer b), monomer c), or a mixture thereof.

For the purpose of the present invention, it has been found to be very particularly appropriate to add the polymerization initiator in three steps, in which case, the amount of initiator added in the third step is greater than the amount of initiator added in the first step and in the second step. More preferably, the amount of polymerization initiator added in the third step is greater than the amount added in the second step, based on the total weight of the polymerization initiator added in the second step. More preferably, the amount of polymerization initiator added in the third step is at least 120% by weight, even more preferably from 120% to 1000% by weight, most preferably from 150% to 500% by weight, based on the total weight of the polymerization initiator added in the second step.

In the third step, the polymerization initiator is appropriately added all at once. Alternatively, it is also preferable to meter in the polymerization initiator in the third step, preferably continuously, especially with a constant metering rate. In a very particularly preferred embodiment of the present invention, the polymerization initiator is metered in continuously in the first, in the second and in the third step, favorably with a constant metering rate in each case, the mean metering rate of the third step preferably being greater than the mean metering rate of the second step, and the mean metering rate of the second step preferably being greater than the mean metering rate of the first step. The ratio of the mean metering rate of the third step to the mean metering rate of the second step is preferably greater than 1.2:1, preferably in the range from 1.2:1 to 10:1, more preferably greater than 1.5:1, even more preferably greater than 2:1, especially greater than 3:1.

The third step is preferably started at a time at which 0.01 to 50% by weight, more preferably 10 to 40% by weight, even more preferably 15 to 35% by weight of the total amount of the polymerization initiator added during the second step, is consumed.

The process detailed above allows a rapid and extremely effective polymerization of ethylenically unsaturated compounds and leads to polymers with comparably low residual monomer contents. Nevertheless, it has occasionally been found to be extremely favorable to provide further initiation toward the end of the reaction in order to lower the residual monomer content of the reaction mixture still further. Further initiation is preferably provided at a time at which at least 75% by weight, appropriately at least 90% by weight and especially at least 95% by weight of the total amount of the polymerization initiator added during the last step has been consumed. Preference is given to adding in a further 5% by weight to 100% by weight of polymerization initiator, based on the total amount of polymerization initiator added beforehand.

The total amount of initiator is preferably in the range from 0.5 to 1% and more preferably in the range from 0.6 to 0.8% by weight, based on the weight of the monomers.

The process can be performed either in the presence or in the absence of a chain transfer agent. The chain transfer agents used may be typical species described for free-radical polymerizations, as known to those skilled in the art.

The sulfur-free chain transfer agents include, for example, without any intention that this should impose a restriction, dimeric α-methylstyrene (2,4-diphenyl-4-methyl-1-pentene), enol ethers of aliphatic and/or cycloaliphatic aldehydes, terpenes, β-terpinene, terpinolene, 1,4-cyclohexadiene, 1,4-dihydronaphthalene, 1,4,5,8-tetrahydronaphthalene, 2,5-dihydrofuran, 2,5-dimethylfuran and/or 3,6-dihydro-2H-pyran, preference being given to dimeric α-methylstyrene.

The sulfur-containing chain transfer agents used may preferably be mercapto compounds, dialkyl sulfides, dialkyl disulfides and/or diaryl sulfides. The following chain transfer agents are mentioned by way of example: di-n-butyl sulfide, di-n-octyl sulfide, diphenyl sulfide, thiodiglycol, ethylthioethanol, diisopropyl disulfide, di-n-butyl disulfide, di-n-hexyl disulfide, diacetyl disulfide, diethanol sulfide, di-t-butyl trisulfide and dimethyl sulfoxide. Compounds used with preference as chain transfer agents are mercapto compounds, dialkyl sulfides, dialkyl disulfides and/or diaryl sulfides. Examples of these compounds are ethyl thioglycolate, 2-ethylhexyl thioglycolate, pentaerythritol tetrathio-glycolate, cysteine, 2-mercaptoethanol, 1,3-mercapto-propanol, 3-mercaptopropane-1,2-diol, 1,4-mercaptobutanol, mercaptoacetic acid, 3-mercaptopropionic acid, thioglycolic acid, mercaptosuccinic acid, thioglycerol, thioacetic acid, thiourea and alkyl mercaptans such as n-butyl mercaptan, n-hexyl mercaptan, t-dodecyl mercaptan or n-dodecyl mercaptan. Polymerization regulators used with particular preference are mercapto alcohols and mercapto carboxylic acids. In the context of the present invention, very particular preference is given to the use of n-dodecyl mercaptan and tert-dodecyl mercaptan as chain transfer agents.

In a particular aspect of the present invention, it is possible to use mixtures of chain transfer agents, preferred mixtures comprising especially sulfur-containing chain transfer agents such as the abovementioned mercaptan derivatives and sulfur-free chain transfer agents such as terpinolene, terpinene and derivatives thereof, and suitable transition metal complexes. More preferably, the chain transfer agents are selected from the group consisting of n-dodecyl mercaptan, tert-dodecyl mercaptan, terpinolene or a mixture thereof.

The chain transfer agents are used preferably in amounts of 0.05 to 10% and especially 1 to 6% by weight and more preferably 2 to 4.5% by weight, based on the total weight of the monomers used in the polymerization (namely, the total weight of the monomer composition).

Further information can be found by the person skilled in the art in the specialist literature, especially the publications H. Rausch-Puntigam, T. Völker "Acryl- und Methacrylverbindungen" [Acrylic and Methacrylic Compounds] Springer, Heidelberg, 1967; Houben-Weyl "Methoden der organischen Chemie" [Methods of Organic Chemistry] Vol. XIV/1, p. 66ff., Georg Thieme, Heidelberg, 1961 and Kirk-Othmer "Encyclopedia of Chemical Technology" Vol. 1, p. 296ff., J. Wiley, New York, 1978.

Processes of particular interest are especially those in which a majority of the monomers is initially charged and the polymerization initiators, as explained above, are added in several steps over the polymerization time. Preferably, at least 50% by weight, especially at least 60% by weight, more preferably at least 80% by weight and most preferably at least 90% by weight of the monomers can be initially charged in a reactor.

Subsequently, the initiators mentioned can be added at the polymerization temperature. The chain transfer agents may either be initially charged or added with the initiator, the chain transfer agents being initially charged in preferred processes. Particular preference here is given to processes in which at least 50% by weight, especially at least 60% by weight, more preferably at least 80% by weight and most preferably at least 90% by weight of the total weight of chain transfer agent are initially charged in a reactor.

The polymerization can be performed at standard pressure, reduced pressure or elevated pressure. The polymerization temperature is also uncritical. In general, however, it is in the range of from 20 to 200°C, preferably from 20 to 180°C and more preferably from 60 to 150°C. In the case of performance of a free-radical polymerization, higher polymerization temperatures may be preferable; for instance, the polymerization temperature in the case of stepwise addition of the initiator may preferably be in the range from 20 to 180°C, more preferably 60 to 150°C. Particular preference is given here to processes in which the polymerization is performed at a temperature in the range from 0 to 30°C above the reaction temperature, at which the half-life of the initiator is 30 minutes.

The polymerization can be performed with or without solvent. The term "solvent" should be understood here in a broad sense. The solvents to be used include hydrocarbon solvents, for example aromatic solvents such as toluene, benzene and xylene, saturated hydrocarbons, for example cyclohexane, heptane, octane, nonane, decane, dodecane, which may also be present in branched form. These solvents can be used individually or else as a mixture. Particularly preferred solvents are mineral oils, natural oils and synthetic oils, and mixtures thereof.

In a preferred embodiment, the proportion of solvent can be kept low, preferred embodiments of the process according to the invention having the feature that, after the polymerization has ended, there is no need to remove solvent from the composition, for example by distillation, in order to obtain a useable polymer mixture. Accordingly, the proportion of solvent which is used overall is preferably in the range from 0 to 30% by weight, more preferably 0.5 to 10% by weight and most preferably in the range from 1 to 8% by weight. The solvent here may especially serve for dissolution of the initiator added over the course of the reaction.

The measures detailed above, especially the stepwise addition of the initiator to a reactor comprising relatively large amounts of the monomers, can give surprising advantages. One of these is more particularly that the reaction can be performed without any great amounts of solvents. This allows the reaction to be conducted very inexpensively. It is surprisingly possible to obtain, more particularly, very narrow molecular weight distributions with a low polydispersity index without any need to use costly processes such as ATRP. In addition, the reaction time and initiator consumption can be minimized.

### Lubricating oil compositions

As indicated above, the present invention also relates to a lubricating oil composition comprising at least one base oil and at least one polyalkyl (meth)acrylate polymer as defined in the present invention.

The base oils correspond to lubricant base oils, mineral, synthetic or natural, animal or vegetable oils suited to their use/chosen depending on the intended use.

The base oils used in formulating the lubricating oil compositions according to the present invention include, for example, conventional base stocks selected from API (American Petroleum Institute) base stock categories known as Group I, Group II, Group III, Group IV and Group V. The Group I and II base stocks are mineral oil materials (such as paraffinic and naphthenic oils) having a viscosity index (or VI) of less than 120. Group I is further differentiated from Group II in that the latter contains greater than 90% saturated materials and the former contains less than 90% saturated material (that is more than 10% unsaturated material). Group III is considered the highest level of mineral base oil with a VI of greater than or equal to 120 and a saturates level greater than or equal to 90%. Group IV base oils are polyalphaolefins (PAO). Group V base oils are esters and any other base oils not included in Group I to IV base oils. These base oils can be used individually or as a mixture.

Preferably, the base oil included in the lubricating oil composition of the present invention is selected from the group of mineral oils consisting of API Group I base oils, API Group II base oils, API Group III base oils or a mixture thereof. Most preferably, the lubricant composition comprises an API Group I base oil, API Group II base oil or a mixture thereof.

Preferably, the lubricating oil composition for use in accordance with the invention comprises from 5 to 50% by weight, more preferably from 10 to 40% by weight, and even more preferably from 10 to 30% by weight of polyalkyl (meth)acrylate polymer according to the invention, based on the total weight of the lubricating oil composition.

Preferably, the lubricating oil composition according to the invention comprises 50 to 95% by weight, preferably 60 to 90% by weight, and most preferably 70 to 90% by weight of base oil, based on the total weight of the lubricating oil composition.

In a preferred embodiment of the invention, the lubricating oil composition comprises polyisononyl methacrylate, poly-2-propylheptyl methacrylate, polyisodecyl methacrylate or a mixture thereof, and a base oil. All preferred aspects of the polymer, base oil and amounts as listed above apply for this lubricating oil composition.

The lubricating oil compositions according to the present invention may also comprise any other additional additives suitable for use in the formulations. These additives include additional viscosity index improvers, pour point depressants, dispersants, demulsifiers, defoamers, lubricity additives, friction modifiers, antioxidants, detergents, dyes, corrosion inhibitors and/or odorants.

According to a preferred aspect of the invention, the total content of the polyalkyl (meth)acrylates and the base oil in the lubricant composition sums up to 90% by weight or more, more preferably sums up to 95% by weight or more by weight, based on the total weight of the lubricant composition.

### Applications for the polyalkyl (meth)acrylate polymer of the invention

The invention also relates to the use of the polyalkyl (meth)acrylate polymer according to the present invention, as defined herein above, as a lubricant additive or a synthetic base fluid, by adding said polyalkyl (meth)acrylate polymer to a lubricating oil composition.

Preferably, the lubricating oil composition is a gear oil composition, a transmission oil composition, a hydraulic oil composition, an engine oil composition, a marine oil composition, an industrial lubricating oil composition or a grease.

The invention also relates to a method of thickening a lubricating oil composition by adding a polyalkyl (meth)acrylate polymer according to the present invention, as a lubricant additive or a synthetic base fluid, to said lubricating oil composition.

Thus, the invention relates to a method of optimizing the rheological properties of a lubricating oil composition by adding a polyalkyl (meth)acrylate polymer according to the present invention, as a lubricant additive or a synthetic base fluid, to said lubricating oil composition.

In the experimental part, the examples demonstrate that, even at low treat rates, the polyalkyl (meth)acrylate polymer according to the present invention provides a very good thickening effect when added to the lubricating oil composition, while maintaining good shear stability. Furthermore, the polymers have good viscometric performance, including low temperature and viscosity index performance to reduce the effect of changes in viscosity with temperature, when used in lubricating oil compositions. The polymeric additives also have a positive influence on component solubility thanks to their chemical structure.

### EXPERIMENTAL PART

The invention is further illustrated in detail hereinafter with reference to examples and comparative examples, without any intention to limit the scope of the present invention. All percentages in relation to monomers or base fluids given in the tables below are weight percentages (wt%).

### Abbreviations

| | |
|---|---|
| AP/E Core^{™} 2500 | base stock from ExxonMobil with a KV100 of ~31.5 mm²/s |
| BV | bulk viscosity |
| BV100 | bulk viscosity @100°C in accordance with ASTM D445 |
| Chevron 600R | Group II base oil from Chevron with a KV100 of 12 mm²/s |
| cSt | centistokes corresponding to mm²/s in SI units |
| cP | centipoise corresponding to mPa·s in SI units |
| DDM | dodecyl mercaptan |
| EHA | 2-ethylhexyl acrylate |
| EHMA | 2-ethylhexyl methacrylate |
| HiTEC^{®} 307 | additive package commercially available from Afton Chemical |
| Ini | initiator |
| IDMA | isodecyl methacrylate (89.9 wt% C₁₀ alkyl chain; proportion of branched alkyl chains is 98 wt%) |
| INMA | isononyl methacrylate (99 wt% C₉ alkyl chain, proportion of branched alkyl chains is 90 wt% or more) |
| ISO | International Organization for Standardization |
| KRL | Tapered Roller Bearing Shear Stability Test according to CEC L-45-A-99 |
| KV | kinematic viscosity measured according to ASTM D445 |
| KV-10 | kinematic viscosity measured at -10°C to ASTM D445 |
| KV40 | kinematic viscosity measured at 40°C to ASTM D445 |
| KV100 | kinematic viscosity measured at 100°C to ASTM D445 |
| LIMA | alkyl methacrylate with 12 to 15 carbon atoms in the alkyl side chain (based on LIAL 125 alcohol commercially available from Sasol; proportion of branched alkyl chains is 60 wt%) |
| LMA | lauryl methacrylate (73 wt% C₁₂, 27 wt% C₁₄, all linear) |
| MMA | methyl methacrylate |
| Mₙ | number-average molecular weight |
| M_{w} | weight-average molecular weight |
| nDMA | n-decyl methacrylate |
| n.m. | not measured |
| OCMA | 2-octyl methacrylate |
| PDI | polydispersity index |
| PHMA | 2-propylheptyl methacrylate |
| PP | pour point |
| PPD | pour point depressant |
| SL40 | shear loss determined at 40°C after KRL (20 hours run at 60°C) |
| TDDM | tert-dodecyl mercaptan |
| VG | viscosity grade |
| VI | viscosity index |
| VPL 1-325 | Evonik VISCOPLEX^{®} 1-325, polyalkyl methacrylate pour point depressant |
| VPL 14-520 | Evonik VISCOPLEX^{®} 14-520, organo-modified siloxane defoamer |

### Test methods

| | |
|---|---|
| KV | ASTM D445 |
| VI | ASTM D2270 |
| KRL | CEC L-45-A-99 |
| PP | ASTM D5950 |
| Foam test | ASTM D892-18 |

### Examples

### Procedure for preparing polymer example Ex. 1

A round-bottom flask equipped with a glass stir rod, nitrogen inlet, thermometer and reflux condenser were initially charged with a monomer (mixture) as defined in Table 1. For the inventive example Ex.1, 496.25 g of INMA were charged to the flask together with 9.5 g (1.90 wt% relative to the total amount of monomers) of dodecyl mercaptan (DDM) and 7.0 g (1.40 wt% relative to the total amount of monomers) of tert-dodecyl mercaptan (TDDM). 1.25 g of tert-butylperoxy-2-ethylhexanoat (0.25 wt% relative to the total amount of monomers) was dissolved in 3.75 g of INMA. The initiator solution was metered in within three hours, with addition of 2 wt% of the amount specified within the first hour, 10 wt% within the second hour and 88 wt% within the third hour. After the feed ended, the mixture was stirred for an additional hour, before an initiator chaser shot (1 g of tert-butylperoxy-2-ethylhexanoat, 0.20 wt% relative to the total amount of monomers) was added. After another hour, a second initiator chaser shot (1 g of tert-butylperoxy-2-ethylhexanoat, 0.20 wt% relative to the total amount of monomers) was added. Finally, the mixture was stirred for at least an additional hour.

The inventive examples and comparative examples were prepared in a similar way as inventive example Ex.1, except that the amounts of reactants and/or other reaction conditions were changed as listed in Table 1 or described in the following.

For inventive examples Ex.3, Ex.6, Ex.7, Ex.9, as well as comparative examples Ex.2*, Ex.3*, and Ex.6* to Ex.10* the initiator solution was added with 5 wt% of the amount specified within the first hour, 25 wt% within the second hour and 70 wt% within the third hour. For inventive examples Ex.4, Ex.5 and Ex.8, the initiator solution was added with 2 wt% of the amount specified within the first hour, 25 wt% within the second hour and 73 wt% within the third hour. For comparative example Ex.11*, the initiator solution was added with 2 wt% of the amount specified within the first hour, 15 wt% within the second hour and 83 wt% within the third hour.

For inventive examples Ex.3, Ex.6 and Ex.7, as well as comparative examples Ex.2*, Ex.3*, and Ex.6* to Ex.8* no chaser shots were added and the whole amount of initiator (0.65 wt% initiator relative to the total amount of monomer) dissolved in monomer was added with the feed. For Ex.5, Ex.8 and comparative Ex.4* and additional distillation step at 10 mbar and 165°C was included at the end.

Details regarding the polymer composition of the individual examples, prepared according to the above-indicated procedure, are provided in Tables 1 and 2, together with basic properties of the polymers. The main amount of the monomer is always first charged to the flask. A solution of the initiator in the remaining amount of monomer is then fed at 110°C over a set period of time. For copolymers with monomer mixtures, all monomers are mixed and charged to the reactor before feeding the initiator. The amount of chain transfer agent is adjusted as listed in Table 1 to control the molecular weight of the polymer. All polymers were synthesized with 0.65 wt% initiator relative to the total amount of monomer.

### Method of preparing comparative example Ex. 5* - polyacrylate

0.81 g of DBPO (0.3 wt% relative to the acrylate in the feed) dissolved in 270 g EHA was slowly fed to 30 g of Chevron 600R under nitrogen at 150°C within 2 hours. After the feed had been finalized and stirring for 2 hours at 150°C, the resulting clear and colorless polymer solution was cooled down.

In the present invention, the bulk viscosity (BV) of the polymer (product obtained from polymerization reaction) corresponds to the kinematic viscosity (KV) of the resulting product of the polymerization measured in accordance with ASTM D445. Thus, the bulk viscosity of the polymers (BV100) as shown in Table 2 below, were measured as kinematic viscosity at 100°C in accordance with ASTM D445. The thickening of each polymer in oil was tested by mixing 30% by weight of polymer in 70% by weight of Chevron 600R base oil (Group II base oil). The results for the kinematic viscosity at 100°C and 40°C were measured in accordance with ASTM D445 and are listed in Table 2.

Formulations comprising inventive polymers and comparative polymers of Table 2 were then prepared. The amounts of components along with the properties of the different formulations such as viscosity index, kinematic viscosity and shear loss are shown in Table 3 for formulations using Group II base oil adjusted to a kinematic viscosity of approximately 320 mm²/s at 40°C.

Table 4 shows the amounts of components along with the viscosities and viscosity index of formulations adjusted to a kinematic viscosity of approximately 460 mm²/s or 680 mm²/s at 40°C in a mixture of a Group I and Group II base oil.

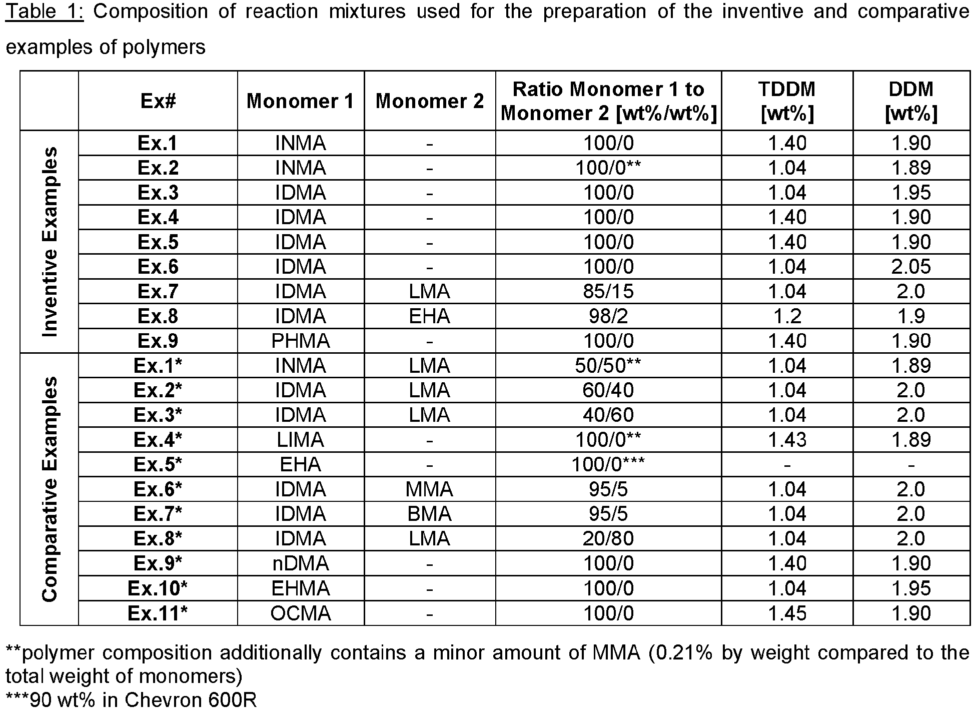

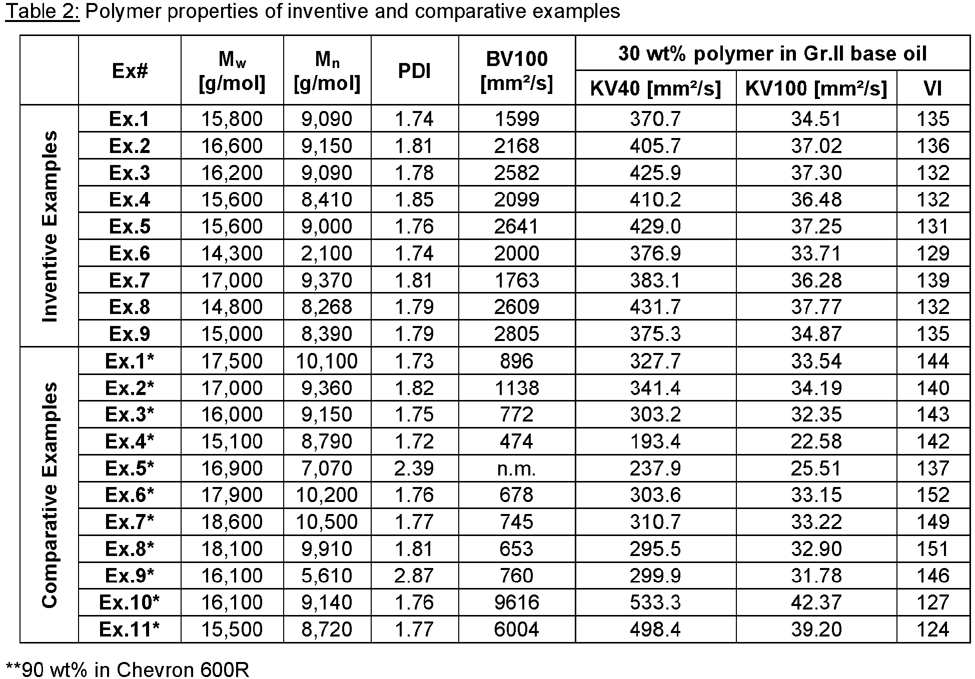

As shown in Table 2 above, the inventive polymers according to the invention all have a high BV100 in contrast to the comparative polymers Ex.1* to 9*. Only comparative Ex.10* and Ex.11*, prepared with EHMA and OCMA (C8 alkyl methacrylate), show a high BV100. This is also reflected in the comparison of the thickening of 30% by weight of each polymer in Group II base oil as listed in Table 2. KV40 is most relevant for the thickening power as the viscosity at 40°C defines the ISO class of the fluid. Especially the comparative example Ex.5*, which is pure EHA, compared to the inventive examples Ex.1 and 2, which are pure INMA of similar weight-average molecular weight, demonstrates the higher thickening of methacrylates compared to acrylates. Furthermore, comparative Ex.6* and Ex.7* demonstrate that already 5% by weight of short-chain methacrylates, such as MMA or BMA, in the polymer composition is detrimental to the target of high thickening. Ex.6* and Ex.7* show lower KV40 values in the 30% by weight in Group II base oil mixture, thus poorer thickening, compared to the polymers according to the present invention.

**Table 3: Lubricant formulations with approximately 320 mm²/s KV40**

| | **Inventive Examples** | | | | **Comparative Examples** | | |
|---|---|---|---|---|---|---|---|
| **Form. Ex.** | | **F-1** | **F-2** | **F-3** | | **F-1*** | **F-2*** |
| **Ex.2 [wt%]** | | 25.32 | | | | | |
| **Ex.3 [wt%]** | | | 24.23 | | | | |
| **Ex.8 [wt%]** | | | | 24.5 | | | |
| **Ex.1* [wt%]** | | | | | | 28.9 | |
| **Ex.4* [wt%]** | | | | | | | 34.41 |
| **HiTEC^{®} 307 [wt%]** | | 2.65 | 2.65 | 2.65 | | 2.65 | 2.65 |
| **VPL 1-325 [wt%]** | | 0.5 | 0.5 | 0.5 | | 0.5 | 0.5 |
| **Chevron 600R [wt%]** | | 71.53 | 72.62 | 72.35 | | 67.95 | 62.44 |
| **KV40 [mm²/s]** | | 318.4 | 317.8 | 319.4 | | 318.5 | 318.8 |
| **KV100 [mm²/s]** | | 30.93 | 30.21 | 30.46 | | 32.69 | 33.43 |
| **VI** | | 134 | 131 | 131 | | 144 | 147 |
| **PP [°C]** | | -30 | -27 | -27 | | -27 | -30 |
| **SL 40°C [%]** | | 1.6 | 1.3 | n.m. | | 0.8 | 0.5 |

**Table 4: Lubricant formulations with 460 mm²/s or 680 mm²/s KV40**

| | **Inventive Examples** | | | | **Comparative Examples** | |
|---|---|---|---|---|---|---|
| **Form. Ex.** | | | **F-4** | **F-5** | **F-3*** | **F-4*** |
| **Ex.4 [wt%]** | | | 12.2 | 24.8 | | |
| **Ex.4* [wt%]** | | | | | 17.4 | 35.5 |
| **HiTEC^{®} 307 [wt%]** | | | 2.7 | 2.7 | 2.7 | 2.7 |
| **VPL 1-325 [wt%]** | | | 0.5 | 0.5 | 0.5 | 0.5 |
| **Chevron 600R [wt%]** | | | 24.6 | 32 | 19.4 | 21.3 |
| **AP/E Core^{™} 2500 [wt%]** | | | 60 | 40 | 60 | 40 |
| **KV40 [mm²/s]** | | | 458.7 | 676.9 | 458.7 | 682.3 |
| **KV100 [mm²/s]** | | | 34.29 | 47.84 | 36.12 | 53.85 |
| **VI** | | | 111 | 121 | 119 | 138 |

As shown in Table 3 above, the formulations with KV40 of 320 mm²/s comprising polymers according to the invention (Ex.2, Ex.3, Ex.8 used in F-1 to F-3, respectively) deliver a reduction in treat rate of at least 3.6 wt% up to 11.2 wt% in comparison to the comparative examples (Ex.1*, Ex.4* used in F-1* and F-2*, respectively). The lower treat rate is achieved while maintaining good viscometrics with a VI of more than 120, small shear losses at 40°C of less than 2% and comparable pour points. Similar observations are made for formulations with higher KV40, such as 460 or 680 mm²/s, in a Group I+II base oil mixtures as shown in Table 4. The inventive example Ex.4 has significantly lower treat rates (F-4 and F-5), compared to the comparative example Ex.4* (F-3*, F-4*). Using the inventive examples, the treat rates are 5.2 wt% and 10.7 wt% lower as for the comparative example for the VG460 and VG680, respectively.

The comparative polymer examples with higher amounts of methacrylate monomer units having a linear alkyl chain, such as Ex.1* to Ex.3* and Ex.8*, are poorer in thickening efficiency and are not able to reduce the treat rate in the same amount as the examples according to the present invention. Furthermore, also the comparative example Ex.4*, similar to Example 1 of US9617495, with 100% by weight of a C₁₂-C₁₅ methacrylate monomer (60% branched and 40% linear alkyl chains), is not able to achieve the treat rate advantage. US9617495 also describes the use of the monomer IDMA. However, the corresponding IDMA-containing polymers disclosed in US9617495 all contain a maximum of 20% by weight of this monomer (Example 4 in US9617495). It can be observed that the comparative example Ex.8*, similar to Example 4 of US9617495, with a high amount of linear alkyl methacrylate monomer units is poor in thickening efficiency. Additionally, the comparative example Ex.6*, containing 5% by weight of MMA, therefore similar to the polymer composition of WO2012/135054, shows a lower KV40 value than the polymers according to the present invention.

When used in lubricant oil compositions, the polymers should not only be able to thicken an oil to a desired viscosity, even at low treat rates as shown in Tables 3 and 4 above, but they should also not have any negative impact on the foaming properties of the lubricant oil composition they are added to. Ideally, no foam or only very little foam with quick collapse times should be observed to meet the requirements of the industry.

Formulations in Group II base oil adjusted to a kinematic viscosity of approximately 320 mm²/s at 40°C were prepared to test foaming properties according to ASTM D892-18 (Standard Test Method for Foaming Characteristics of Lubricating Oils from 2018). The test procedure used within this patent application uses Option A for sample preparation and a cylindrical gas diffuser. According to ASTM D892-18, the test includes three sequences at 24°C, at 93.5°C and 24°C, wherein for each sequence the volume of foam is recorded directly after the blowing period and then again after 10 minutes of settling. In case, foam formation is observed but disappears within the 10 minutes, a collapse time is calculated. The amounts of components along with the properties such as viscosity index, kinematic viscosities and foam behavior are shown in Table 5 below.

**Table 5: Lubricant formulations with a KV40 of 320 mm²/s and additional foam test results**

| | **Inventive Examples** | | | **Comparative Examples** | |
|---|---|---|---|---|---|
| **Form. Ex.** | **F-6** | **F-7** | **F-8** | **F-5*** | **F-6*** |
| **Ex.1 [wt%]** | 26.6 | | | | |
| **Ex.5 [wt%]** | | 24.8 | | | |
| **Ex.8 [wt%]** | | | 24.5 | | |
| **Ex.10* [wt%]** | | | | 22.3 | |
| **Ex.11* [wt%]** | | | | | 23.0 |
| **HiTEC^{®} 307 [wt%]** | 2.65 | 2.65 | 2.65 | 2.65 | 2.65 |
| **VPL 1-325 [wt%]** | 0.5 | 0.5 | 0.5 | 0.5 | 0.5 |
| **VPL 14-520 [wt%]** | 0.2 | 0.2 | 0.2** | 0.2 | 0.2 |
| **Chevron 600R [wt%]** | 70.05 | 71.85 | 72.35 | 74.35 | 73.65 |
| **KV40 [mm²/s]** | 315.6 | 321.6 | 319.4 | 320.9 | 314.4 |
| **KV100 [mm²/s]** | 30.8 | 30.37 | 30.46 | 30.59 | 29.11 |
| **VI** | 135 | 130 | 131 | 132 | 126 |
| **PP [°C]** | -27 | -27 | -27 | -30 | -27 |
| **KV-10 [mm²/s]** | 18,553 | 20,634 | 19,448 | solid | solid |

| **Foam test** | | | | | |
|---|---|---|---|---|---|
| ***Sequence I (24°C)*** | | | | | |
| Foam after Blowing Period [mL] | 0 | 0 | 0 | 0 | 0 |
| Foam after 10 min [mL] | 0 | 0 | 0 | 0 | 0 |
| Collapse time [s] | 0 | 0 | 0 | 0 | 0 |

| ***Sequence II (93.5°C)*** | | | | | |
|---|---|---|---|---|---|
| Foam after Blowing Period [mL] | 0 | 20 | 20 | 330 | 310 |
| Foam after 10 min [mL] | 0 | 0 | 0 | 0 | 0 |
| Collapse time [s] | 0 | 70 | 97 | 272 | 228 |

| ***Sequence III (24°C)*** | | | | | |
|---|---|---|---|---|---|
| Foam after Blowing Period [mL] | 0 | 0 | 0 | 0 | 0 |
| Foam after 10 min [mL] | 0 | 0 | 0 | 0 | 0 |
| Collapse time [s] | 0 | 0 | 0 | 0 | 0 |

| | | | | | |
|---|---|---|---|---|---|
| **top-treat of VPL 14-520 | | | | | |

Norms such as ISO12925 have a limit of 100 mL foam direct after blowing period and a limit of 10 mL foam after 10 minutes, for each sequence. Inventive formulation F-6 outperforms because no foam formation is observed at all (all values at OmL). Inventive formulations F-7 and F-8 have also very good foam test results and would comply with the ISO12925 norm requirements. In contrast, the comparative formulations F-5* and F-6*, comprising a polyalkyl (meth)acrylate polymer from pure C8 methacrylate monomer units (polymers Ex.10* and Ex.11*), show poor foam test results since it is observed a significant foam formation and long collapse times.

In Table 5 above, the low temperature performance of the formulations has also been tested. The kinematic viscosity at -10 °C /KV-10) of both comparative formulations F-5* and F-6*, comprising a polyalkyl (meth)acrylate polymer from pure C8 methacrylate monomer units (polymers Ex.10* and Ex.11*), were not measurable as the samples became solid at -10°C. In contrast, formulations F-6 to F-8 comprising the inventive polymers according to the invention, show better low temperature performance at -10°C.

Thus, the experimental data demonstrate that the polyalkyl (meth)acrylate polymers as defined in claim 1 prepared with a monomer composition with high amounts of branched methacrylate monomers and only low amounts of short-chain methacrylates, such as MMA, is crucial to achieve a high thickening and a treat rate advantage, while maintaining good viscometric and low temperature performance. Furthermore, the polymers according to the invention do not have any negative impact on the foaming properties of the lubricant oil composition they are added to.

## Claims

1. A polyalkyl (meth)acrylate polymer obtainable by polymerizing a monomer composition consisting of:
a) at least 85% by weight of monomer a) selected from the group consisting of an alkyl methacrylate with the formula (I) or a mixture thereof, based on the total weight of the monomer composition, 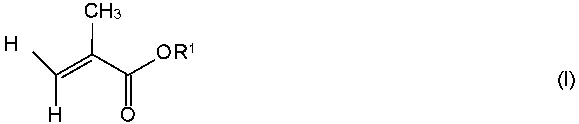 wherein R¹ is a linear or a branched alkyl radical having 9 or 10 carbon atoms and wherein from 80% to 100% by weight of the R¹ radicals are branched, based on the weight of the total amount of methacrylate monomers a) of formula (I),
b) from 0 to 15% by weight of monomer b) selected from the group consisting of an alkyl methacrylate monomer having a linear or a branched alkyl chain from 11 to 30 carbon atoms, or a mixture thereof, based on the total weight of the monomer composition,
c) from 0 to 3% by weight of monomer c) selected from the group consisting of alkyl (meth)acrylate having a linear alkyl chain from 1 to 6 carbon atoms, alkyl acrylates having an alkyl chain from 7 to 18 carbon atoms, or a mixture thereof, based on the total weight of the monomer composition,
wherein more than 80% by weight of the monomers a), b) and c) in the monomer composition are branched, and
wherein the polyalkyl (meth)acrylate polymer has a weight-average molecular weight from 5,000 to 30,000 g/mol according to DIN 55672-1.

2. The polyalkyl (meth)acrylate polymer according to claim 1, wherein the polyalkyl (meth)acrylate polymer has a kinematic viscosity from 1,000 to 50,000 mm²/s at 100°C according to ASTM D 445.

3. The polyalkyl (meth)acrylate polymer according to claim 2, wherein the polyalkyl methacrylate has a kinematic viscosity from 1,000 to 30,000 mm²/s at 100°C according to ASTM D 445, preferably from 1,200 to 20,000 mm²/s at 100°C according to ASTM D 445, more preferably from 1,500 to 10,000 mm²/s at 100°C according to ASTM D 445.

4. The polyalkyl (meth)acrylate polymer according to any one of the previous claims, wherein the monomer a) is selected from the group consisting of isononyl methacrylate, 2,6-dimethyl-4-heptyl methacrylate, 2-propylheptyl methacrylate, isodecyl methacrylate, or a mixture thereof.

5. The polyalkyl (meth)acrylate polymer according to any one of the previous claims, wherein the monomer composition comprises from 85 to 100% by weight, preferably from 85 to 99.9% by weight, more preferably from 85 to 95% by weight, even more preferably from 85 to 94.9% by weight, of monomer a), based on the total weight of the monomer composition.

6. The polyalkyl (meth)acrylate polymer according any one of the previous claims, wherein the monomer composition comprises from 5 to 15% by weight, preferably from 5 to 14.9% by weight, of monomer b), based on the total weight of the monomer composition.

7. The polyalkyl (meth)acrylate polymer according any one of the previous claims, wherein the monomer composition comprises from 0.1 to 3% by weight, of monomer c), based on the total weight of the monomer composition.

8. The polyalkyl (meth)acrylate polymer according to any one of claims 1 to 3, wherein the total amount of alkyl methacrylate monomer a) in the monomer composition sums up to 100% by weight, based on the total weight of the monomer composition.

9. The polyalkyl (meth)acrylate polymer according to any one of the previous claims, wherein the polyalkyl (meth)acrylate polymer has a weight-average molecular weight from 10,000 to 25,000 g/mol, preferably from 13,000 to 20,000 g/mol, according to DIN 55672-1.

10. The polyalkyl (meth)acrylate polymer according to any one of the previous claims, wherein the polyalkyl (meth)acrylate polymer has a polydispersity index from 1.0 to 2.5, preferably from 1.5 to 2.2, more preferably from 1.5 to 2.0.

11. A method for the preparation of a polyalkyl (meth)acrylate polymer as defined in any one of claims 1 to 10, wherein the method comprises the steps of:
i) providing a monomer composition as defined in any one of claims 1 and 4 to 8,
ii) initiating radical polymerization in the monomer composition of step i) to obtain the polyalkyl (meth)acrylate polymer.

12. A lubricating oil composition comprising one or more base oil and at least one polyalkyl (meth)acrylate polymer according to any one of claims 1 to 10.

13. The lubricating oil composition according to claim 12, wherein the base oil is selected from the group consisting of API Group I mineral oil, API Group II mineral oil, API Group III mineral oil, or a mixture thereof.

14. The lubricating oil composition according to claim 12 or 13, wherein the lubricating oil composition comprises from 5 to 50% by weight, more preferably from 10 to 40% by weight, and even more preferably from 10 to 30% by weight of polyalkyl (meth)acrylate polymer, based on the total weight of the lubricating oil composition.

15. Method of thickening a lubricating oil composition by adding a polyalkyl (meth)acrylate polymer as defined in any one of claims 1 to 10, as a lubricant additive or a synthetic base fluid, to said lubricating oil composition, preferably in a gear oil composition, a transmission oil composition, a hydraulic oil composition, an engine oil composition, a marine oil composition, an industrial lubricating oil composition or in grease.

## Patentansprüche

1. Polyalkyl(meth)acrylat-Polymer, das erhältlich ist durch Polymerisieren einer Monomerzusammensetzung bestehend aus:
a) mindestens 85 Gew.-% Monomer a), ausgewählt aus der Gruppe bestehend aus einem Alkylmethacrylat mit der Formel (I) oder einer Mischung davon, bezogen auf das Gesamtgewicht der Monomerzusammensetzung, 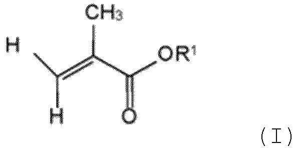 wobei R¹ für einen linearen oder verzweigten Alkylrest mit 9 oder 10 Kohlenstoffatomen steht und wobei 80 bis 100 Gew.-% der R¹-Reste verzweigt sind, bezogen auf das Gewicht der Gesamtmenge von Methacrylat-Monomeren a) der Formel (I),
b) 0 bis 15 Gew.-% Monomer b), ausgewählt aus der Gruppe bestehend aus einem Alkylmethacrylat-Monomer mit einer linearen oder verzweigten Alkylkette mit 11 bis 30 Kohlenstoffatomen oder einer Mischung davon, bezogen auf das Gesamtgewicht der Monomerzusammensetzung,
c) 0 bis 3 Gew.-% Monomer c), ausgewählt aus der Gruppe bestehend aus Alkyl(meth)acrylat mit einer linearen Alkylkette mit 1 bis 6 Kohlenstoffatomen, Alkylacrylaten mit einer Alkylkette mit 7 bis 18 Kohlenstoffatomen oder einer Mischung davon, bezogen auf das Gesamtgewicht der Monomerzusammensetzung,
wobei mehr als 80 Gew.-% der Monomere a), b) und c) in der Monomerzusammensetzung verzweigt sind, und
und wobei das Polyalkyl(meth)acrylat-Polymer ein gewichtsmittleres Molekulargewicht von 5000 bis 30.000 g/mol gemäß DIN 55672-1 aufweist.

2. Polyalkyl(meth)acrylat-Polymer nach Anspruch 1, wobei das Polyalkyl(meth)acrylat-Polymer eine kinematische Viskosität von 1000 bis 50.000 mm²/s bei 100 °C gemäß ASTM D 445 aufweist.

3. Polyalkyl(meth)acrylat-Polymer nach Anspruch 2, wobei das Polyalkylmethacrylat eine kinematische Viskosität von 1000 bis 30.000 mm²/s bei 100 °C gemäß ASTM D 445, vorzugsweise von 1200 bis 20.000 mm²/s bei 100 °C gemäß ASTM D 445, weiter bevorzugt von 1500 bis 10.000 mm²/s bei 100 °C gemäß ASTM D 445, aufweist.

4. Polyalkyl(meth)acrylat-Polymer nach einem der vorhergehenden Ansprüche, wobei das Monomer a) ausgewählt ist aus der Gruppe bestehend aus Isononylmethacrylat, 2,6-Dimethyl-4-heptylmethacrylat, 2-Propylheptylmethacrylat, Isodecylmethacrylat oder einer Mischung davon.

5. Polyalkyl(meth)acrylat-Polymer nach einem der vorhergehenden Ansprüche, wobei die Monomerzusammensetzung 85 bis 100 Gew.-%, vorzugsweise 85 bis 99,9 Gew.-%, weiter bevorzugt 85 bis 95 Gew.-%, noch weiter bevorzugt 85 bis 94,9 Gew.-%, Monomer a), bezogen auf das Gesamtgewicht der Monomerzusammensetzung, umfasst.

6. Polyalkyl(meth)acrylat-Polymer nach einem der vorhergehenden Ansprüche, wobei die Monomerzusammensetzung 5 bis 15 Gew.-%, vorzugsweise 5 bis 14,9 Gew.-%, Monomer b), bezogen auf das Gesamtgewicht der Monomerzusammensetzung, umfasst.

7. Polyalkyl(meth)acrylat-Polymer nach einem der vorhergehenden Ansprüche, wobei die Monomerzusammensetzung 0,1 bis 3 Gew.-% Monomer c), bezogen auf das Gesamtgewicht der Monomerzusammensetzung, umfasst.

8. Polyalkyl(meth)acrylat-Polymer nach einem der Ansprüche 1 bis 3, wobei sich die Gesamtmenge von Alkylmethacrylat-Monomer a) in der Monomerzusammensetzung auf 100 Gew.-%, bezogen auf das Gesamtgewicht der Monomerzusammensetzung, summiert.

9. Polyalkyl(meth)acrylat-Polymer nach einem der vorhergehenden Ansprüche, wobei das Polyalkyl(meth)acrylat-Polymer ein gewichtsmittleres Molekulargewicht von 10.000 bis 25.000 g/mol, vorzugsweise von 13.000 bis 20.000 g/mol, gemäß DIN 55672-1 aufweist.

10. Polyalkyl(meth)acrylat-Polymer nach einem der vorhergehenden Ansprüche, wobei das Polyalkyl(meth)acrylat-Polymer einen Polydispersitätsindex von 1,0 bis 2,5, vorzugsweise von 1,5 bis 2,2, weiter bevorzugt von 1,5 bis 2,0, aufweist.

11. Verfahren zur Herstellung eines Polyalkyl(meth)acrylat-Polymers gemäß einem der Ansprüche 1 bis 10, wobei das Verfahren folgende Schritte umfasst:
i) Bereitstellen einer Monomerzusammensetzung gemäß einem der Ansprüche 1 und 4 bis 8,
ii) Initiieren von Radikalpolymerisation in der Monomerzusammensetzung von Schritt i) unter Erhalt des Polyalkyl(meth)acrylat-Polymers.

12. Schmierölzusammensetzung, umfassend ein oder mehrere Grundöle und mindestens ein Polyalkyl(meth)acrylat-Polymer nach einem der Ansprüche 1 bis 10.

13. Schmierölzusammensetzung nach Anspruch 12, wobei das Grundöl ausgewählt ist aus der Gruppe bestehend aus Mineralöl der API-Gruppe I, Mineralöl der API-Gruppe II, Mineralöl der API-Gruppe III oder einer Mischung davon.

14. Schmierölzusammensetzung nach Anspruch 12 oder 13, wobei die Schmierölzusammensetzung 5 bis 50 Gew.-%, weiter bevorzugt 10 bis 40 Gew.-% und noch weiter bevorzugt 10 bis 30 Gew.-% Polyalkyl(meth)acrylatPolymer, bezogen auf das Gesamtgewicht der Schmierölzusammensetzung, umfasst.

15. Verfahren zum Verdicken einer Schmierölzusammensetzung durch Zugabe eines Polyalkyl(meth)acrylat-Polymers gemäß einem der Ansprüche 1 bis 10 als Schmiermitteladditiv oder synthetische Grundflüssigkeit zu der Schmierölzusammensetzung, vorzugsweise in einer Zahnradölzusammensetzung, einer Getriebeölzusammensetzung, einer Hydraulikölzusammensetzung, einer Motorölzusammensetzung, einer Schiffsölzusammensetzung, einer technischen Schmierölzusammensetzung oder in Schmierfett.

## Revendications

1. Polymère poly((méth)acrylate d'alkyle) pouvant être obtenu par polymérisation d'une composition de monomères constituée de :
a) au moins 85 % en poids de monomère a) choisi dans le groupe constitué par les méthacrylates d'alkyle répondant à la formule (I) ou un mélange de ceux-ci, par rapport au poids total de la composition de monomères, 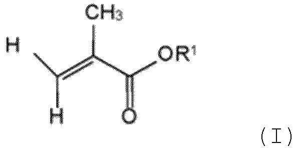 R¹ représentant un radical alkyle linéaire ou ramifié ayant 9 ou 10 atomes de carbone et 80 % à 100 % en poids des radicaux R¹ étant ramifiés, par rapport au poids de la quantité totale de monomères méthacrylates a) de formule (I),
b) de 0 à 15 % en poids de monomère b) choisi dans le groupe constitué par les monomères méthacrylates d'alkyle ayant une chaîne alkyle linéaire ou ramifiée allant de 11 à 30 atomes de carbone, ou un mélange de ceux-ci, par rapport au poids total de la composition de monomères,
c) de 0 à 3 % en poids de monomère c) choisi dans le groupe constitué par un (méth)acrylate d'alkyle ayant une chaîne alkyle linéaire allant de 1 à 6 atomes de carbone, les acrylates d'alkyle ayant une chaîne alkyle allant de 7 à 18 atomes de carbone ou un mélange de ceux-ci, par rapport au poids total de la composition de monomères,
plus de 80 % en poids des monomères a), b) et c) dans la composition de monomères étant ramifiés et
le polymère poly((méth)acrylate d'alkyle) ayant une masse moléculaire moyenne en poids allant de 5 000 à 30 000 g/mol selon la norme DIN 55672-1.

2. Polymère poly((méth)acrylate d'alkyle) selon la revendication 1, le polymère poly((méth)acrylate d'alkyle) ayant une viscosité cinématique allant de 1 000 à 50 000 mm²/s à 100 °C selon la norme ASTM D 445.

3. Polymère poly((méth)acrylate d'alkyle) selon la revendication 2, le poly(méthacrylate d'alkyle) ayant une viscosité cinématique allant de 1 000 à 30 000 mm²/s à 100 °C selon la norme ASTM D 445, de préférence allant de 1 200 à 20 000 mm²/s à 100 °C selon la norme ASTM D 445, plus préférablement allant de 1 500 à 10 000 mm²/s à 100 °C selon la norme ASTM D 445.

4. Polymère poly((méth)acrylate d'alkyle) selon l'une quelconque des revendications précédentes, le monomère a) étant choisi dans le groupe constitué par le méthacrylate d'isononyle, le méthacrylate de 2,6-diméthyl-4-heptyle, le méthacrylate de 2-propylheptyle, le méthacrylate d'isodécyle ou un mélange de ceux-ci.

5. Polymère poly(méth)acrylate d'alkyle) selon l'une quelconque des revendications précédentes, la composition de monomères comprenant de 85 à 100 % en poids, de préférence de 85 à 99,9 % en poids, plus préférablement de 85 à 95 % en poids, encore plus préférablement de 85 à 94,9 % en poids, de monomère a), par rapport au poids total de la composition de monomères.

6. Polymère poly(méth)acrylate d'alkyle) selon l'une quelconque des revendications précédentes, la composition de monomères comprenant de 5 à 15 % en poids, de préférence de 5 à 14,9 % en poids, de monomère b), par rapport au poids total de la composition de monomères.

7. Polymère poly((méth)acrylate d'alkyle) selon l'une quelconque des revendications précédentes, la composition de monomères comprenant de 0,1 à 3 % en poids de monomère c), par rapport au poids total de la composition de monomères.

8. Polymère poly(méth)acrylate d'alkyle) selon l'une quelconque des revendications 1 à 3, la quantité totale de monomère méthacrylate d'alkyle a) dans la composition de monomères totalisant 100 % en poids, par rapport au poids total de la composition de monomères.

9. Polymère poly(méth)acrylate d'alkyle) selon l'une quelconque des revendications précédentes, le polymère poly((méth)acrylate d'alkyle) ayant une masse moléculaire moyenne en poids allant de 10 000 à 25 000 g/mol, de préférence allant de 13 000 à 20 000 g/mol, selon la norme DIN 55672-1.

10. Polymère poly((méth)acrylate d'alkyle) selon l'une quelconque des revendications précédentes, le polymère poly((méth) acrylate d'alkyle) ayant un indice de polydispersité allant de 1,0 à 2,5, de préférence allant de 1,5 à 2,2, plus préférablement allant de 1,5 à 2,0.

11. Procédé pour la préparation d'un polymère poly((méth)acrylate d'alkyle) tel que défini dans l'une quelconque des revendications 1 à 10, le procédé comprenant les étapes consistant à :
i) fournir une composition de monomères telle que définie dans l'une quelconque des revendications 1 et 4 à 8,
ii) amorcer une polymérisation radicalaire dans la composition de monomères de l'étape i) pour obtenir le polymère poly((méth)acrylate d'alkyle).

12. Composition d'huile lubrifiante comprenant une ou plusieurs huiles de base et au moins un polymère poly((méth)acrylate d'alkyle) selon l'une quelconque des revendications 1 à 10.

13. Composition d'huile lubrifiante selon la revendication 12, l'huile de base étant choisie dans le groupe constitué par de l'huile minérale du groupe I selon l'API, de l'huile minérale du groupe II selon l'API, de l'huile minérale du groupe III selon l'API ou un mélange de celles-ci.

14. Composition d'huile lubrifiante selon la revendication 12 ou 13, la composition d'huile lubrifiante comprenant de 5 à 50 % en poids, plus préférablement de 10 à 40 % en poids et encore plus préférablement de 10 à 30 % en poids de polymère poly((méth)acrylate d'alkyle), par rapport au poids total de la composition d'huile lubrifiante.

15. Procédé d'épaississement d'une composition d'huile lubrifiante par l'ajout d'un polymère poly((méth)acrylate d'alkyle) tel que défini dans l'une quelconque des revendications 1 à 10, en tant qu'additif de lubrifiant ou fluide de base synthétique, à ladite composition d'huile lubrifiante, de préférence dans une composition d'huile pour engrenages, une composition d'huile pour transmission, une composition d'huile hydraulique, une composition d'huile pour moteur, une composition d'huile pour moteur marin, une composition d'huile lubrifiante industrielle ou dans de la graisse.
